# EUROPEAN PATENT SPECIFICATION

(11) **EP 0 569 101 B1**
(45) Date of publication and mention of the grant of the patent: **30.07.1997**
(21) Application number: 93201301.4
(22) Date of filing: 06.05.1993
(51) Int. Cl.: F16L 9/133, C08J 7/04

(54) **Composite part comprising at least two polymer sections, and process for its manufacture**
Polymerverbundteil aus zwei Teilen und Verfahren zur dessen Herstellung
Pièce composite plastique en deux parties et procédé de fabrication

(30) Priority: 08.05.1992 US 880949; 08.05.1992 US 880948; 08.05.1992 US 880947
(43) Date of publication of application: 10.11.1993
(73) Proprietor: SHELL INTERNATIONALE RESEARCH MAATSCHAPPIJ B.V., 2596 HR Den Haag (NL)
(72) Inventor: Danforth, Richard Louis, Missouri City, Texas 77459 (US); Byrd, Paul Sharon, Houston, Texas 77070 (US); Waters, Dixie Green, Houston, Texas 77055 (US); Michaels, Nicholas, Houston, Texas 77077 (US)

(56) References cited:
- EP-A- 0 320 049
- EP-A- 0 455 265
- WO-A-86/07010
- US-A- 3 561 493

## Description

This patent application relates to a composite part comprising a first polymer section and a second polymer section in which the second polymer section is directly neighbouring upon the first polymer section and exhibits interactive adhesion therewith. The application further relates to a process for the manufacture of the composite part.

Coextrusion of multiple layers of different polymers through a common die is used to produce composite parts in the form of, for example, sheet, film, coatings, profiles, pipe, tubing and foam-core products. Food and beverage packaging is a common application of such coextruded products. Sheet or film, for example, are often shaped after coextrusion into various packaging items by methods such as thermoforming, solid-phase pressure forming, or stamping. Preparation of tubing and hoses for use in automobiles and industrial equipment is another application. Individual polymers exhibit a wide variety of properties, such as permeability to oxygen, water vapour, and other gases and liquids, and chemical resistance to acids, bases, hydrocarbons, oils, alcohols, and other materials. Coextrusion of multiple polymer layers can be used to prepare a product with optimum properties for a particular application.

No comprehensive theory exists for predicting inter-layer adhesion in coextrusion of different polymers. Even materials which form compatible blends do not necessarily exhibit good adhesion when coextruded. For example, a polyketone polymer and an ethylene vinyl alcohol copolymer will form a compatible blend, but will not adhere when coextruded. Adhesive polymers are commonly used as "tie layers" to bond incompatible polymers that do not normally adhere to each other. Ethylene-vinyl acetate, ethylene-acrylic acid, and ethylene-methyl acrylate copolymers are commonly used as tie layers.

Coextrusion of polymers without the use of tie layers allows the use of simpler equipment, and production of a lower cost product. It would be desirable to provide a coextruded product of two or more dissimilar polymer layers, produced without the use of any tie layers.

In an analogous processing technique, injection moulding may be used to form composite parts by injecting two or more polymers into the same mould to make a composite part. The specialized techniques used to produce such composite parts include coinjection, dual shot, multi-shot and shuttle moulding. As an alternative, a pre-moulded article may be inserted into a larger mould cavity, and a second polymer injected into the larger mould, coating part or all of the surface of the premoulded article. This technique is known as insert moulding. In the fabrication of such composite parts, it is essential to have strong adhesion between the different polymer surfaces to maintain the integrity of the product moulded article. It would also be desirable to provide a composite part, prepared through injection moulding of two or more dissimilar polymers and without the use of any adhesive or tie layer between the dissimilar polymers.

EP-A-445865 disclosed a composite part in the form of a container wherein the first polymer section is a layer comprising a linear alternating polyketone polymer of carbon monoxide and an olefinically unsaturated hydrocarbon, and the second polymer section is a layer comprising a copolymer of vinylidene chloride. EP-A-445865 teaches that this container is manufactured by applying the second layer onto the first layer by using techniques which essentially do not require the application of much heat, such as by dry spraying, solvent spraying or impact spraying. A skilled person will appreciate that the application of melt processing techniques, requiring much heat, in the manufacture of composite parts containing this particular combination of polymers may well lead to problems. These polymers have relatively high melting points and both have a limited thermal stability, whereby the strongly acid products formed upon thermal degradation of the copolymer of vinylidene chloride will accelerate (catalyse) the thermal degradation of the polyketone polymer.

It has now been found that coextruded laminates can be made comprising a layer of a linear alternating polyketone polymer and a layer of a thermoplastic polymer selected from thermoplastic polyurethanes, phenoxy resins and polyamides which contain units of polymerized hexamethylenediamine/adipic acid. Without having used a tie layer in between the polymer layers, the polymer layers thus formed exhibit strong interactive adhesion, i.e. the layers form a laminate which may be flexed, kinked or cut, whilst the layers continue to act as a single layer. The selected polymers do not have the disadvantage of the copolymer of vinylidene chloride, viz. they do not form strongly acidic products upon melt processing.

Accordingly, the present invention relates to a composite part comprising a first polymer section and a second polymer section, wherein the first polymer section comprises a linear alternating polyketone polymer of carbon monoxide and an olefinically unsaturated hydrocarbon, and the second polymer section comprises a thermoplastic polymer selected from the group consisting of thermoplastic polyurethanes, phenoxy resins and polyamides which contain units of polymerized hexamethylenediamine/adipic acid, and wherein the second polymer section is directly neighbouring upon the first polymer section and exhibits interactive adhesion therewith.

The invention also relates to a process for the manufacture of a composite part according to the invention by applying the molten or plastified polymer of one of the first and second polymer section onto the molten, plastified or solid polymer of the other of the first and second polymer section and subsequently solidifying the polymer(s).

The present finding is unexpected as many other polymers, which may be similar in structure to the selected polymers do not provide interactive adhesion to the linear alternating polyketone polymer. Layers of these other polymers may exhibit only some form of mechanical bond to the polyketone polymer, which causes easy separation once one of the layers is impaired, or they do not exhibit any adhesion at all.

The composite parts according to this invention may contain more than two polymer sections. For example, when the composite part is a coextruded multi-ply laminate, it may include three layers, wherein either the selected thermoplastic polymer is sandwiched between two layers of the polyketone polymer, or the polyketone polymer is sandwiched between two layers of the selected thermoplastic polymer. The coextruded laminates of the invention may be flat, such as sheet or film; shaped, such as pipe or tubing; or further processed, such as by blow moulding into containers, etc.

The polyketone polymers are thermoplastic polymers of a linear alternating structure and contain substantially one molecule of carbon monoxide for each molecule of unsaturated hydrocarbon. Ethylenically unsaturated hydrocarbons suitable for use as precursors of the polyketone polymers have up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic, containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene.

The preferred polyketone polymers are copolymers of carbon monoxide and ethylene or terpolymers of carbon monoxide, ethylene and a second ethylenically unsaturated hydrocarbon of at least 3 carbon atoms, preferably an α-olefin such as propylene. When the preferred polyketone terpolymers are employed, there will be within the terpolymer at least 2 units derived from a monomer of ethylene for each unit derived from a monomer of the second hydrocarbon. Preferably, there will be from 10 units to 100 units derived from a monomer of ethylene for each unit derived from a monomer of the second hydrocarbon. The polymer chain of the preferred polyketone polymers has recurring units represented by the formula 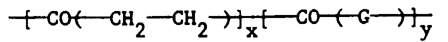 wherein G is derived from the monomer of ethylenically unsaturated hydrocarbon of at least 3 carbon atoms polymerized through the ethylenic unsaturation and the ratio of y:x is no more than 0.5. The -CO-(-CH₂-CH₂-)- units and the -CO-(-G-)- units are found randomly throughout the polymer chain. Preferred ratios of y:x are from 0.01 to 0.1. When copolymers of carbon monoxide and ethylene are employed, there will be no second hydrocarbon present and the copolymers are represented by the above formula wherein y is zero. The precise nature of the end groups does not appear to influence the properties of the polymer to any considerable extent, so the polymers are fairly represented by the formula for the polymer chain as depicted above.

Of particular interest are the polyketone polymers which have a melting point from 175 °C to 300 °C, more typically from 210 °C to 270 °C. The polymers have typically a limiting viscosity number (LVN), measured in m-cresol at 60 °C in a standard capillary viscosity measuring device, from 0.5 dl/g to 10 dl/g, preferably from 0.8 dl/g to 4 dl/g.

The polyketone polymers are known in the art per se. For example, U.S. 4,880,903 discloses a linear alternating polyketone terpolymer of carbon monoxide, ethylene, and other olefinically unsaturated hydrocarbons, such as propylene. Processes for production of the polyketone polymers typically involve the use of a catalyst composition formed from a compound of a Group VIII metal selected from palladium, cobalt, or nickel, the anion of a strong non-hydrohalogenic acid, and a bidentate ligand of phosphorus, arsenic or antimony. U.S. 4,843,144 discloses a process for preparing linear alternating polyketone polymers of carbon monoxide and at least one ethylenically unsaturated hydrocarbon using a catalyst comprising a compound of palladium, the anion of a non-hydrohalogenic acid having a pKa of below 6 and a bidentate ligand of phosphorus.

The thermoplastic polyurethanes include polyether-based poly-urethanes and polyester-based polyurethanes. Such polyurethane polymers may be prepared from long chain polyols reacted with polyisocyanates and chain extenders.

The polyols may be of two basic types, either polyether-type or polyester-type. Polyether-type polyols usable herein include poly(oxypropylene) glycols and poly(oxytetramethylene) glycols. Polyester-type polyols usable herein can be hydroxyl terminated polyesters prepared from, e.g., adipic acid and an excess of glycol, such as ethylene glycol, neopentyl glycol, hexanediol-1,6-, and the like or mixtures thereof. The thermoplastic polymethanes are preferably prepared from polyols having a molecular weight between 750 and 10,000, more preferably between 750 and 3500. In the preparation of the thermoplastic polyurethanes the polyols can be mixed with a molar excess of an organic diisocyanate to form urethane linkages in a linear polymer. This linear polymer can be reacted with a chain extending agent, such as water, diamine, or hydroxy-amine.

Any of a wide variety of diisocyanate compounds may be used in the polymerization to prepare the thermoplastic polyurethane usable herein. Aromatic diisocyanates, such as toluene-2,4-diisocyanate (and its dimers), 4,4'-methylene-bis(phenyl isocyanate), 1,5-naphthylene diisocyanate and 4-tertbutyl m-phenylene diisocyanate are usable herein. Diphenyl methane diisocyanate may be particularly advantageous for use herein. Aliphatic compounds such as hexamethylene diisocyanate and tetramethylene diisocyanate, and the alicyclic compounds such as 1,4-cyclohexylene diisocyanate may be operable. It is to be understood that these diisocyanates may be used either singly or in combination.

The chain-extending agent can contain a plurality of active hydrogen atoms, with up to two atoms in the molecule having active hydrogen attached thereto. A preferred chain extending agent is 1,4-butanediol. Suitable chain-extending agents include ethylene diamine, m-tolylene diamine, benzidine, diethylene glycol, hydrazine, succinic acid and 1,4-butanedisulfonic acid.

The phenoxy resins are high molecular weight thermoplastic polymers derived from a bisphenol and epichlorohydrin. The number average molecular weights of the phenoxy resins are typically 45,000, while those of epoxy thermoset resins are typically no more than 8,000. The phenoxy resins substantially lack the terminal epoxide functionality of the epoxy resins, and are therefore thermally stable. Phenoxy resins may suitably have the general formula: 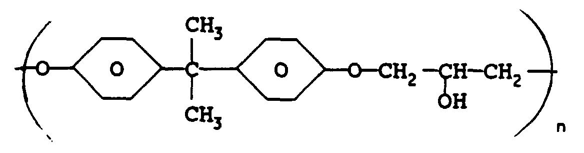 wherein n is typically at least 100 and may be up to 300. Phenoxy resins are well known in the art, and are produced by conventional methods.

The polyamides which can be used in the composites of the invention are those which contain units of polymerized hexamethylenediamine/adipic acid. A suitably polyamide is acid), well known as nylon-6,6. Good results can also be obtained when the polyamide is a copolymer of polymerized hexamethylenediamine/adipic acid and caprolactam and/or 12-aminododecanoic acid, i.e. a copolymer of nylon-6,6, nylon-6 and/or nylon-12.

The polymer sections of the composite part according to the invention may each comprise a single polymer. Alternatively one or more of the polymer sections comprise a polymer blend which includes one or more further polymers. It will be appreciated that high contents of the further polymer(s) may reduce the adhesion exhibited between the polyketone polymer and the selected thermoplastic polymer. Hence, if the first polymer section comprises a polymer blend the polyketone polymer is preferably present therein in a quantity of at least 50 %w, more preferably at least 75 %w, calculated on the total weight of the polymers of the first polymer section. If the second polymer section comprises a polymer blend the selected thermoplastic polymer(s) is/are preferably present therein in a quantity of at least 50 %w, more preferably at least 75 %w, calculated on the total weight of the polymers of the second polymer section. For example, suitable polymers for blending with the polyamide containing units of polymerized hexamethylenediamine/adipic acid are other thermoplastic polyamides, such as nylon-4,6, nylon-6, nylon-11, nylon-12 and nylon-6,12, of which nylon-6 and nylon-12 are preferred.

The polymers or polymer blends used in the manufacture of the composites of the invention may contain conventional additives such as antioxidants and stabilizers, dyes, fillers or reinforcing agents, fire resistant materials, mould release agents, colorants and other materials designed to improve the processability of the polymers or the properties of the resulting products. Such additives are added prior to, or concurrent with the processing of the polyketone and the selected thermoplastic polymers.

The process of this invention can be carried out in various ways, for example using a coextrusion technique or using any of the many moulding techniques.

Coextrusion techniques and equipment are well known in the art. Coextrusion involves the extrusion of molten or plastified polymers through adjacent or multimanifold dies, such that the extrudates, still in molten, semi-molten, or plastified form, are brought together to form coextruded multi-ply laminates. The thickness of each ply obtained may be in the range of 0.00127 mm (0.05 mils) to 1.27 mm (50 mils) or more, depending on the desired end use. The plies can be of the same thickness, or different. Film laminates typically have a thickness of from 0.0127 mm (0.5 mils) to 0.254 mm (10 mils), while sheet laminates (which are frequently used for thermoforming) typically have a thickness of from 0.254 mm (10 mils) to 2.54 mm (100 mils) or more. Similar techniques are used to produce both flat articles, such as films and sheet, shaped articles, for packaging and other uses, and profiles, such as pipe and tubing.

The subject invention may also be exploited through use of other methods, such as insert moulding, injection moulding and blow moulding. For example, adhesion between the polyketone and the selected thermoplastic polymers may be achieved by applying a molten layer of one polymer onto a finished artifact or solid insert prepared from the other polymer. Two-shot injection moulding may be used to prepare shaped articles that would contain layers or sections of polyketone and, e.g., thermoplastic polyurethane, or an article of one polymer encapsulated within the other polymer. A cross-head die, for example, may be used to extrude one molten polymer over a rod or tube made from the other polymer. Blow moulding is particularly suitable for making bottles and other containers, toys, and various industrial items.

The invention is further illustrated by the following Examples which should not be regarded as limiting.

### Example 1

Various samples of a linear alternating terpolymer of carbon monoxide, ethylene, and propylene were produced in the presence of a catalyst composition formed from palladium acetate, trifluoroacetic acid, and 1,3-bis[di(2-methoxyphenyl)phosphino]propane. The polyketone polymers had a melting point of 220 °C and an LVN of 1.8 dl/g when measured in m-cresol at 60 °C. Conventional additives were added to the polyketone polymer.

### Example 2

Bi-layered tubing was made from the polyketone polymer of Example 1 and two types of thermoplastic polyurethane (TPU), a polyether-type TPU and a polyester-type TPU. The TPUs were manufactured by the B.F. Goodrich Company.

The bi-layered tubing was made in a coextrusion process which utilized two single-screw extruders. The compression ratio of the extruders was 3:1, and the length to diameter ratio was 24:1. A 38.1 mm (1.5 inch) diameter extruder was used to process the polyketone polymer, and a 25.4 mm (1 inch) diameter extruder was used for the two TPUs. Both extruders fed into a single manifold coextrusion die. The coextruded tubing was pulled at a rate of 0.10 m/s (20 feet per minute) from the die, through a weir sizer, and into a cooling tank. Each TPU was extruded as a coating over a molten polyketone substrate. The coextruded tubing had a TPU layer that was 0.254 mm (10 mils) thick, and a polyketone layer that was 0.762 mm (30 mils) thick.

The polyketone polymer was processed at a melt temperature between 238 °C and 243 °C (460 °F and 470 °F). The polyether-type TPU was processed at a melt temperature of 166 °C (330 °F) and the polyester-type TPU was processed at a melt temperature of 177 °C (350 °F). The die temperature was set at 216 °C (420 °F) for the polyether TPU/polyketone coextrusion, and at 243 °C (470 °F) for the polyester TPU/polyketone coextrusion. Best results with this type of die were obtained by starting the 25.4 mm (1 inch) diameter coating extruder first, followed by the 38.1 mm (1.5 inch) diameter substrate extruder, to prevent plugging in the die.

After cooling, the two types of tubing were flexed, kinked, and cut open longitudinally. The TPU and polyketone layers acted as a single unit and could not be separated. An attempt was made to separate the TPU and polyketone layers, in order to conduct a "peel" test for adhesion, however adhesion between the two layers was too great to allow separation without destroying one or both layers of polymer.

### Example 3

A polyketone terpolymer of Example 1 was injection moulded on an injection moulding machine to form a plaque of 103.2 cm² (4 inches square) and 1.27 mm (50 mils) thick. This small plaque was attached inside a larger mould with double-sided tape. A molten polyester-type TPU (Example 2) was slowly injected into the larger mould containing the polyketone plaque. The TPU filled the remaining space within the mould, surrounding the polyketone plaque on all but one side, and forming a composite plaque of 161.3 cm² (5 inches square) and 3.175 mm (1/8 inch) thick. After cooling, the composite plaque warped slightly, due to greater shrinkage of the TPU, relative to the polyketone. An attempt was made to separate the TPU from the polyketone, however, the two materials could not be separated.

### Example 4

Bi-layered tubings were made from, on the one hand, a polyketone polymer of Example 1 and, on the other hand, nylon-6,6, a terpolymer of nylon-6,6, nylon-6 and nylon-12, and two blends of nylon-6,6 with nylon-12. For comparison, bi-layered tubing was also made from a polyketone polymer and nylon-6 (not of the invention). The nylon-6 and nylon-6,6 were manufactured by DuPont Polymers, and the nylon-12 was manufactured by Hüls America. The terpolymer was manufactured by Atochem Polymers. The blends of nylon-6,6 with nylon-12 were prepared by combining proportionate amounts of the solid polymers prior to melting and coextruding. The two blends were 10 wt% nylon-6,6 and 90 wt% nylon-12; and 25 wt% nylon-6,6 and 75 wt% nylon-12. The tubings were made by the method of Example 2. Each nylon or nylon blend was extruded as a coating over a molten polyketone substrate. The nylon-6,6 was processed at a melt temperature of about 288 °C, and a die temperature of about 293 °C. For the nylon-6 and nylon blends, the melt processing and die temperatures were: nylon-6, 210 °C and 232 °C; blend of 25 wt% nylon-6,6 and 75 wt% nylon-12, 213 °C and 241 °C; blend of 10 wt% nylon-6,6 and 90 wt% nylon-12, 213 °C and 238 °C. The terpolymer was processed at a melt temperature of 210 °C and a die temperature of 232 °C.

Of the nylons evaluated, the nylon-6,6 and the terpolymer exhibited a strong interactive adhesion with the polyketone polymer.

By comparison, the nylon-6 and polyketone layers acted as a single unit only until the integrity of either layer was impaired. The tubing could be flexed or kinked without delamination, however, once either layer was cut, the two layers were easily separated. This type of adhesion was designated as a mechanical bond (not of the invention).

The two types of tubing made from blends of nylon-6,6 with nylon-12 were flexed, kinked, and cut open, yet the layers continued to act as a single unit. In these cases it was only possible to separate the layers by applying a strong force by hand.

### Example 5

Bi-layered tubing was made from a polyketone polymer of Example 1 and a thermoplastic phenoxy resin manufactured by Union Carbide. For comparison, bi-layered tubing was also made with a bisphenol A polycarbonate manufactured by Miles (not of the invention).

The tubing was made by the method of Example 2. Both the phenoxy resin and polycarbonate polymer were extruded as a coating over a molten polyketone substrate. The phenoxy resin was processed at a melt temperature of about 204 °C and a die temperature of about 232 °C, and the bisphenol A polycarbonate was processed at a melt temperature of about 260 °C and a die temperature of about 260 °C.

The phenoxy resin exhibited a strong, interactive adhesion when processed with a polyketone polymer. In comparison, the polycarbonate polymer showed no adhesion when processed with a polyketone polymer. When flexed, the two layers of the polycarbonate/polyketone tubing acted independently, resulting in a delamination, or gathering of the surface coating at the bend.

### Example 6

For comparison, an attempt was made to prepare bi-layered tubing from a polyketone polymer of Example 1 and a number of other thermoplastic polymers. However, none of these materials exhibited any adhesion to the polyketone polymer. A list of these polymers is included as Table 1. As described in Example 5, a bisphenol A polycarbonate polymer also showed no adhesion to a polyketone polymer.

It is particularly interesting to note that the ethylene/methyl acrylate (EMA) copolymer, which is commonly used as a tie layer to joint two dissimilar polymers, showed no adhesion with the polyketone polymer.

**Table 1**

| Polymers Exhibiting No Adhesion to Polyketone Polymers | |
|---|---|
| Polymer | Manufacturer |
| ethylene/methyl acrylate (EMA) copolymer | DuPont Polymers |
| ethylene/methacrylic acid copolymer | DuPont Polymers |
| ethylene/methacrylic acid copolymer, partially neutralized | Dow Chemicals |
| ethylene/vinyl alcohol copolymer | Eval Company |
| ethylene/methacrylic acid copolymer, partially neutralized | DuPont Polymers |
| polyether block esteramide copolymer | Atochem Polymers |
| styrene/acrylonitrile copolymer | Monsanto Company |
| dynamically vulcanized thermoplastic polyolefin | Advanced Elastomer Systems |

## Claims

1. A composite part comprising a first polymer section and a second polymer section, wherein the first polymer section comprises a linear alternating polyketone polymer of carbon monoxide and an olefinically unsaturated hydrocarbon and the second polymer section comprises a thermoplastic polymer selected from the group consisting of thermoplastic polyurethanes, phenoxy resins and polyamides which contain units of polymerized hexamethylenediamine/adipic acid, and wherein the second polymer section is directly neighbouring upon the first polymer section and exhibits interactive adhesion therewith.

2. A composite part as claimed in claim 1, characterized in that the polyketone polymer has recurring units of the general formula 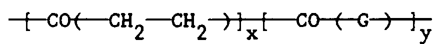 wherein G is derived from a monomer of an α-olefin of at least three carbon atoms polymerized through the ethylenic unsaturation and the ratio y:x is no more than 0.5.

3. A composite part as claimed in claim 2, characterized in that in the general formula of the polyketone polymer G is derived from a monomer of propylene and the ratio y:x is from 0.01 to 0.1.

4. A composite part as claimed in claim 2, characterized in that in the general formula of the polyketone polymer y is zero.

5. A composite part as claimed in any one of claims 1-4, characterized in that the second polymer section comprises a polyether-based or a polyester-based thermoplastic polyurethane.

6. A composite part as claimed in any one of claims 1-4, characterized in that the second polymer section comprises a phenoxy resin of the general formula 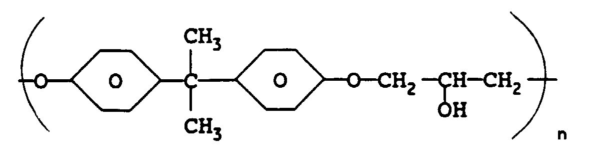 wherein n is an integer of from 100 to 300.

7. A composite part as claimed in any one of claims 1-4, characterized in that the second polymer section comprises poly(hexamethylenediamine-co-adipic acid) or a copolymer of polymerized hexamethylenediamine/adipic acid and caprolactam and/or 12-aminododecanoic acid.

8. A composite part as claimed in any one of claims 1-7, characterized in that it is in the form of a multi-ply laminate in which the polymer sections form neighbouring layers.

9. A composite part as claimed in claim 8, characterized in that the composite part is a coextruded laminate.

10. A composite part as claimed in any one of claims 1-9, characterized in that it is in the form of a tube or a container.

11. A process for the manufacture of a composite part as claimed in claim 1, characterized by applying the molten or plastified polymer of one of the first and second polymer section onto the molten, plastified or solid polymer of the other of the first and second polymer section and subsequently solidifying the polymer(s).

## Patentansprüche

1. Verbundteil, enthaltend einen ersten Polymerabschnitt und einen zweiten Polymerabschnitt, wobei der erste Polymerabschnitt ein lineares alternierendes Polyketonpolymer aus Kohlenmonoxid und einem olefinisch ungesättigten Kohlenwasserstoff und der zweite Polymerabschnitt ein thermoplastisches Polymer, ausgewählt aus der Gruppe bestehend aus thermoplastischen Polyurethanen, Phenoxyharzen und Polyamiden, die Hexamethylendiamin/Adipinsäure-Einheiten einpolymerisiert enthalten, enthält und der zweite Polymerabschnitt dem ersten Polymerabschnitt direkt benachbart ist und damit eine wechselseitige Haftung aufweist.

2. Verbundteil nach Anspruch 1, dadurch gekennzeichnet, daß das Polyketonpolymer wiederkehrende Einheiten der allgemeinen Formel 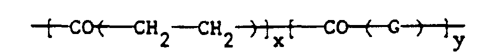 worin G von einem über die ethylenische Ungesättigtheit polymerisierten α-Olefinmonomer mit mindestens 3 Kohlenstoffatomen abgeleitet ist und das Verhältnis y:x nicht mehr als 0,5 beträgt, aufweist.

3. Verbundteil nach Anspruch 2, dadurch gekennzeichnet, daß in der allgemeinen Formel des Polyketonpolymers G von einem Propylenmonomer abgeleitet ist und das Verhältnis y:x 0,01 bis 0,1 beträgt.

4. Verbundteil nach Anspruch 2, dadurch gekennzeichnet, daß in der allgemeinen Formel des Polyketonpolymers y gleich null ist.

5. Verbundteil nach einem der Ansprüche 1-4, dadurch gekennzeichnet, daß der zweite Polymerabschnitt ein thermoplastisches Polyurethan auf Polyether- oder Polyesterbasis enthält.

6. Verbundteil nach einem der Ansprüche 1-4, dadurch gekennzeichnet, daß der zweite Polymerabschnitt ein Phenoxyharz der allgemeinen Formel 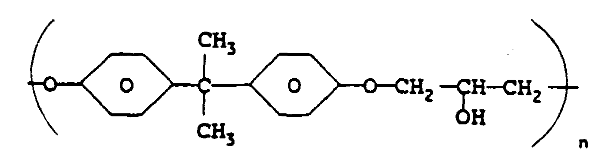 worin n für eine ganze Zahl von 100 bis 300 steht, enthält.

7. Verbundwerkstoff nach einem der Ansprüche 1-4, dadurch gekennzeichnet, daß der zweite Polymerabschnitt Poly(hexamethylendiamin-co-adipinsäure) oder ein Copolymer aus Hexamethylendiamin/Adipinsäure-Polymer und Caprolactam und/oder 12-Aminododecansäure enthält.

8. Verbundteil nach einem der Ansprüche 1-7, dadurch gekennzeichnet, daß es die Form eines mehrlagigen Laminats hat, in dem die Polymerabschnitte benachbarte Schichten bilden.

9. Verbundteil nach Anspruch 8, dadurch gekennzeichnet, daß es sich bei dem Verbundteil um ein coextrudiertes Laminat handelt.

10. Verbundteil nach einem der Ansprüche 1 bis 9, dadurch gekennzeichnet, daß es die Form eines Schlauchs oder Behälters hat.

11. Verfahren zur Herstellung eines Verbundteils nach Anspruch 1, dadurch gekennzeichnet, daß man das schmelzflüssige oder plastifizierte Polymer des ersten oder zweiten Polymerabschnitts auf das schmelzflüssige, plastifizierte oder feste Polymer des jeweils anderen Polymerabschnitts aufbringt und das bzw. die Polymere anschließend verfestigt.

## Revendications

1. Pièce composite comprenant une première section de polymère et une seconde section de polymère, où la première section de polymère comprend un polymère de polycétone alternant et linéaire du monoxyde de carbone et d'un hydrocarbure à insaturation oléfinique, et la seconde section de polymère comprend un polymère thermoplastique choisi dans le groupe formé par les polyuréthannes thermoplastiques, les résines phénoxy thermoplastiques et les polyamides thermoplastiques, qui contiennent des unités d'hexaméthylènediamine/acide adipique polymérisé, et où la seconde section de polymère est directement voisine de la première section de polymère et manifeste une adhérence interactive avec celle-ci.

2. Pièce composite suivant la revendication 1, caractérisée en ce que le polymère de polycétone possède des unités récurrentes représentées par la formule : 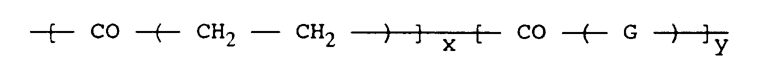 dans laquelle G provient d'un monomère d'une α-oléfine comportant au moins trois atomes de carbone, polymérisé par l'intermédiaire de l'insaturation éthylénique et avec le rapport y:x non supérieur à 0,5.

3. Pièce composite suivant la revendication 2, caractérisée en ce que dans la formule générale du polymère de polycétone, G provient d'un monomère de propylène et le rapport y:x varie de 0,01 à 0,1.

4. Pièce composite suivant la revendication 2, caractérisée en ce que dans la formule générale du polymère de polycétone, y est égal à zéro.

5. Pièce composite suivant l'une quelconque des revendications 1 à 4, caractérisée en ce que la seconde section de polymère est constituée d'un polyuréthanne thermoplastique à base de polyester ou à base de polyéther.

6. Pièce composite suivant l'une quelconque des revendications 1 à 4, caractérisée en ce que la seconde section de polymère se compose d'une résine phénoxy de la formule générale : 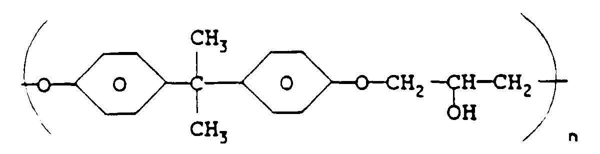 dans laquelle n représente un nombre entier dont la valeur varie de 100 à 300.

7. Pièce composite suivant l'une quelconque des revendications 1 à 4, caractérisée en ce que la seconde section de polymère se compose d'un poly(hexaméthylènediamine-acide adipique) ou d'un copolymère d'hexaméthylènediamine/acide adipique polymérisé et de caprolactame et/ou d'acide 12-aminododécanoïque.

8. Pièce composite suivant l'une quelconque des revendications 1 à 7, caractérisée en ce que qu'elle se présente sous la forme d'un stratifié ou lamifié à couches multiples dans lequel les sections de polymère forment des couches voisines.

9. Pièce composite suivant la revendication 8, caractérisée en ce que la pièce composite est un lamifié extrudé conjointement ou coextrudé.

10. Pièce composite suivant l'une quelconque des revendications 1 à 9, caractérisée en ce qu'elle se présente sous la forme d'un tuyau ou d'un récipient.

11. Procédé de fabrication d'une pièce composite suivant la revendication 1, qui se caractérise par l'application du polymère fondu ou plastifié de l'un de la première et de la seconde section de polymère sur le polymère fondu, plastifié ou solide, de l'autre de la première et de la seconde section de polymère et la solidification subséquente du ou des polymères.
